Europäisches Patentamt

European Patent Office

Office européen des brevets

(11) Publication number: **0 508 642 A1**

# EUROPEAN PATENT APPLICATION

(21) Application number: **92302506.8**

(22) Date of filing: **24.03.92**

(51) Int. Cl.5: **B60K 28/16**

(30) Priority: **06.04.91 GB 9107240**

(43) Date of publication of application:
**14.10.92 Bulletin 92/42**

(84) Designated Contracting States:
**DE ES FR GB IT SE**

(71) Applicant: **LUCAS INDUSTRIES PUBLIC LIMITED COMPANY**
**Brueton House, New Road**
**Solihull, West Midlands B91 3TX(GB)**

(72) Inventor: **Glover, Douglas William**
**69, Foxcote Close, Winyates East**
**Redditch, Worcs. B98 0PS(GB)**
Inventor: **Bridgens, Barry John**
**13, Winding Mill South**
**Ouarry Bank, West Midlands DY5 2LW(GB)**
Inventor: **Howes, Michael John**
**3, Redhouse Close, Bentley Heath**
**Solihull, West Midlands B93 8AR(GB)**

(74) Representative: **Robinson, John Stuart et al**
**Marks & Clerk Alpha Tower Suffolk Street**
**Oueensway**
**Birmingham, B1 1TT(GB)**

(54) **Traction control system and method.**

(57) A traction control system reduces vehicle drive power (7) upon detection of excessive wheel spin (4) to control the wheel spin to acceptable limits. Drive power is restored according to a strategy in which the rate of increase of drive power is increased with time, provided that wheel spin remains below an acceptable value.

FIG.4.

The present invention relates to a traction control system and method.

Traction control systems are provided in order to eliminate or reduce wheel spin for a wheeled vehicle. Wheel spin occurs when the drive is too high for the prevailing frictional contact between the driven wheels and the ground. When frictional contact is lost, one or more of the driven wheels spins and lateral stability of the vehicle can be greatly impaired.

In a typical known type of traction control system, the speed of each driven wheel is compared with a reference representing vehicle speed in order to detect excessive wheel spin. When excessive wheel spin is detected, for instance when the amount of wheel spin exceeds a detection threshold, drive to the driven wheels is reduced, for instance by reducing the output demand of an internal combustion engine which drives the vehicle. When the amount of wheel spin falls below a second target threshold, the traction control system begins to increase drive at a predetermined rate until, for instance, drive is restored to a driver-demanded value. If wheel spin exceeds the target threshold before drive has recovered to the driver-demanded value, drive is again reduced until wheel spin falls below the target threshold and is then restored at the predetermined rate.

During the "recovery" phase of operation when drive is being restored to the demanded value, the rate of restoration must be sufficiently low to avoid instability about the target threshold, which might result in oscillations of substantial amplitude in the vehicle drive. However, such a relatively low value delays the return to the driver-demanded value and thus reduces the performance of the vehicle.

According to a first aspect of the invention, there is provided a traction control system for a vehicle, comprising means for reducing vehicle drive when wheel spin exceeds a first threshold and means for increasing vehicle drive initially at a first rate and subsequently at a second rate greater than the first rate.

Preferably the increasing means is arranged to be actuated to increase vehicle drive each time that wheel spin falls to less than a second threshold. Although the first and second thresholds may be the same, they are preferably different with the second threshold, corresponding to a target value of wheel spin, being less than the first threshold, corresponding to a detection threshold. The reducing means is preferably arranged to reduce drive each time that wheel spin exceeds the second threshold.

Preferably the increasing means is arranged to increase vehicle drive at the first rate for a predetermined time, assuming that wheel spin remains below the second threshold.

The increasing means is preferably arranged to increase vehicle drive at a plurality of rates of increasing size, for instance of linearly increasing size. The rate of increase may increase continuously with time or may comprise a plurality of discrete rates increasing with time, the discrete rates being applied for respective predetermined time periods which may be equal or different. The rate of increase may be exponential, and may be a line segment approximation to an exponential function.

Preferably the traction control system is arranged to be disabled when vehicle drive is restored to a driver-demanded vehicle drive. In the case of an internal combustion engine, for instance controlled by an electronic engine management system, the system may be disabled when the output demand is restored to that demanded by a driver-operated accelerator pedal or a cruise control.

According to a second aspect of the invention, there is provided a method of controlling traction of a vehicle, comprising reducing vehicle drive when wheel spin exceeds a first threshold and increasing vehicle drive initially at a first rate and subsequently at a second rate greater than the first rate.

It is thus possible to provide a traction control system and method which do not suffer from the disadvantages of known arrangements in which the rate of recovery is selected as a compromise between conflicting requirements. The first rate may be of a relatively low value so as to provide stable operation with little or no oscillatory behaviour during an initial recovery phase following a reduction in drive caused by detection of excessive wheel spin. Return to, for instance, a driver-demanded value of vehicle drive occurs more quickly as second and, where present, further rates can be selected to give good vehicle performance substantially without affecting stability during the initial recovery phase. Thus, traction control may be optimised while reducing or minimising loss of vehicle performance, particularly acceleration.

The invention will be further described, by way of example, with reference to the accompanying drawings, in which:-

Figure 1 is a block schematic diagram of a traction control system constituting an embodiment of the invention;

Figure 2 is a flow diagram illustrating operation of the system of Figure 1;

Figure 3 is a graph of drive torque against time illustrating operation of a known type of traction control system; and

Figure 4 is a similar graph to Figure 3 but illustrating operation of the system shown in Figure 1.

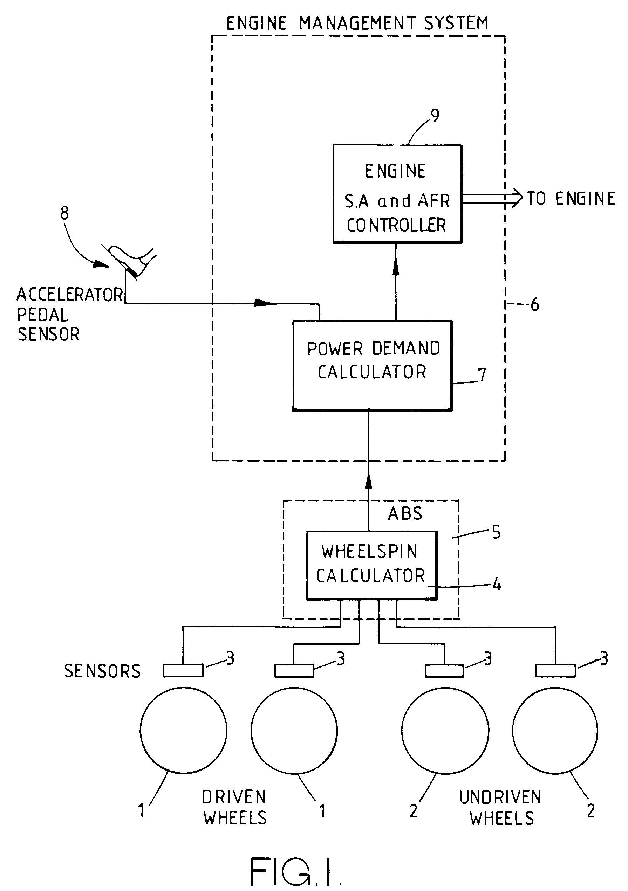

The traction control system shown in Figure 1 is used in a conventional wheeled vehicle driven by an internal combustion engine. The vehicle has driven wheels 1 and undriven wheels 2, each of which is provided with a respective wheel speed sensor 3, for instance comprising a variable reluctance transducer cooperating with a toothed wheel which rotates with the vehicle wheel. The sensors 3 are connected to a wheel spin calculator 4 forming part of an anti-lock brake system (ABS) 5.

The wheel spin calculator 4 compares the speed of each of the driven wheels 1 with a vehicle reference speed. For instance, the vehicle reference speed may be the speed of the slower of the undriven wheels 2, the average of the speeds of the undriven wheels 2, or a speed derived from a speed over ground sensor attached to the vehicle. The wheel spin calculator 4 compares the difference between the speed of each of the driven wheels 1 and the reference vehicle speed with a detection threshold and supplies at its output a signal indicating wheel spin when the detection threshold is exceeded.

In vehicles not equipped with an anti-lock brake system, the sensors 3 and the wheel spin calculator 4 may be provided as additional hardware and/or software. Where the vehicle is provided with the anti-lock brake system 5 embodied as a programmed data processor, the functions of the wheel spin calculator 4 may be provided by additional software if the existing wheel slip detection software is not already suitable.

The wheel spin detection signal is supplied to an engine management system 6 which controls operation of an internal combustion engine connected via a power transmission to the driven wheels 1. The engine management system 6 comprises a power demand calculator 7 which is connected to a position sensor 8 actuated by an accelerator pedal of the vehicle so as to supply a driver-demanded output signal. When present, a cruise control for selecting constant speed operation of the vehicle is also connected to the power demand calculator 7. The power demand calculator 7 calculates a demanded engine output and supplies this to an engine controller 9. The engine controller 9 provides signals which control the spark advance of an ignition system and the quantity and strength of a combustible mixture of fuel and gas comprising or including air.

When the wheel spin detection signal is supplied by the wheel spin calculator 4 to the power demand calculator 7, the normal output demand signal determined by the position of the accelerator pedal is reduced in a predetermined manner by the power demand calculator 7. The quantity of combustible mixture demanded by the controller 9 is thus reduced in order to reduce engine torque. The wheel spin calculator 4 compares the amount of wheel spin with a target spin threshold and sends a further signal to the power demand calculator 7 when wheel spin falls below a target spin threshold, which is less than the detection threshold. Upon receiving this further signal, the calculator 7 begins to restore the engine output demand towards the value corresponding to the current position of the accelerator pedal.

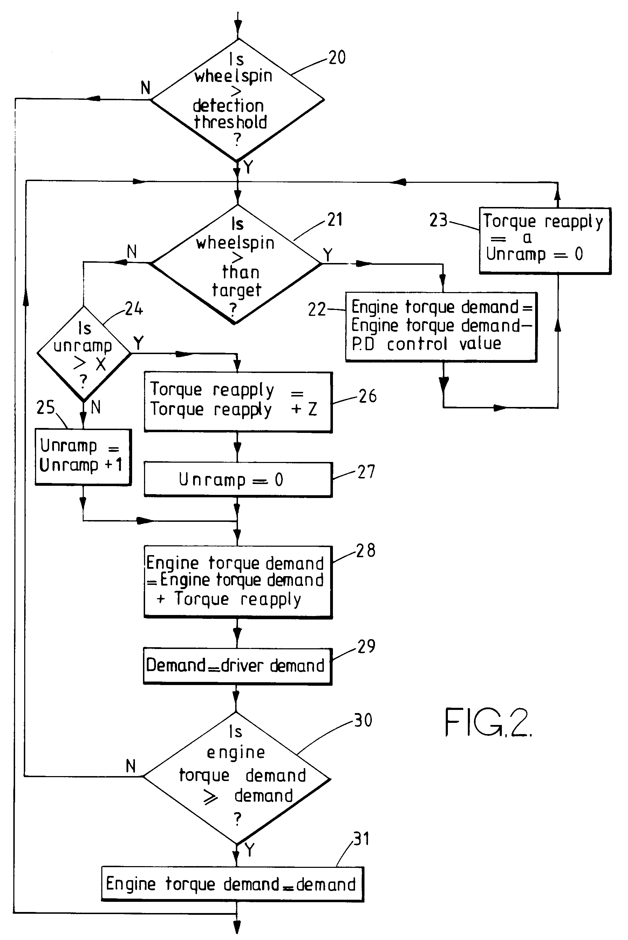

The engine management system 6 is embodied as a programmed data processor, and the reduction and restoration of output demand signals are controlled by additional software, part of which is shown in Figure 2. The steps shown in Figure 2 are performed repetitively as part of the engine management software of the system.

At step 20, wheel spin is compared with the detection threshold and, if less than the detection threshold, control passes to another part of the engine management software. If wheel spin exceeds the detection threshold, wheel spin is compared with a target threshold in a step 21. If wheel spin is greater than the target threshold, the engine torque demand is decremented in a step 22 by a predetermined amount in the form of a proportional/integral/differential (PID) value. Step 23 sets variables "torque reapply" to "a" and "unramp" to 0, after which control returns to the step 21. Thus, following detection of wheel spin in the step 20, engine torque demand is repeatedly reduced by the step 22 until wheel spin falls below the target threshold in the step 21.

When wheel spin becomes less than the target threshold, the variable "unramp" is compared with an index "x" at 24. If less than "x", "unramp" is incremented by 1 at 25. Otherwise, the variable "torque reapply" is incremented by "z" at 26 and "unramp" is reset to 0 at 27.

At step 28, engine torque demand is set to the sum of the previous engine torque demand and "torque reapply". At 29, a variable "demand" is set equal to the driver demand by reading the current output of the accelerator pedal sensor 8 and, at step 30, the engine torque demand is compared with "demand". If the engine torque demand is less than the prevailing driver demand, control returns to the step 21. If the engine torque demand exceeds the prevailing driver demand, engine torque demand is set equal to the driver demand in a step 31 and control passes to another part of the engine management system software.

Thus, for as long as wheel spin is less than the target value until the engine torque demand has recovered to the driver-demanded value, the engine output demand is progressively increased. For an initial recovery time period of a number of cycles of the traction control software equal to "x", the engine output demand increases at a rate equal to "a" divided by the cycle time of each cycle.

After x cycles, the step 26 increases the increment to $a+z$ and the engine torque demand is incremented for x cycles. After 2x cycles, the increment is increased to $a+2z$, and so on until the engine torque demand is found to be greater than or equal to the driver demand in the step 30, whereupon traction control ceases.

Thus, restoration of the output demand signal to the driver-demanded value occurs in accordance with a line segment function which represents an approximation to an exponential function defined by the parameters a, x, z, and the cycle time of the traction control system software.

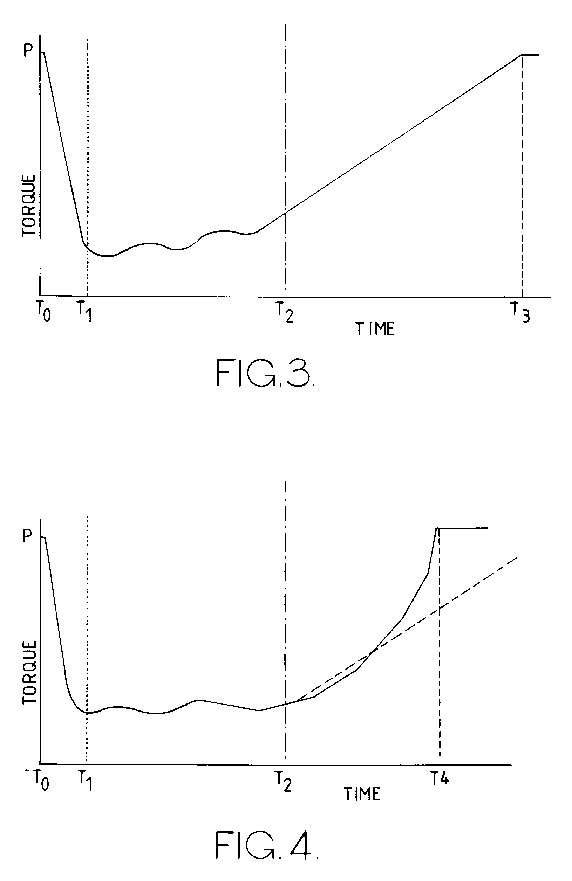

Figure 3 illustrates operation of a known type of traction control system. At time $T_0$, excessive wheel spin is detected, ie the amount of wheel spin exceeds the detection threshold, and engine output torque is reduced from a driver-demanded value P until wheel spin falls below a target threshold at time $T_1$. For instance, it is assumed that the vehicle has driven onto a surface of relatively low coefficient of friction at time $T_0$. During the time interval $T_1$ to $T_2$, the traction control system increases engine torque until the target threshold is exceeded and then again reduces torque. Thus, as shown in Figure 3, engine torque oscillates as the traction control system attempts to maintain wheel spin at the target value, generally between a fraction of a kilometre per hour and a few kilometres per hour of wheel spin.

At the time $T_2$, the vehicle drives onto a surface of higher coefficient of friction such that wheel spin falls to 0 very rapidly as proper frictional contact between the driven wheels 1 and the ground surface is regained. The traction control system thus causes engine torque to increase linearly until time $T_3$, when it has been restored to the driver-demanded value P. As described previously, the rate of increase of torque during the time period from $T_2$ to $T_3$ is the same as the rate which is applied during the time interval $T_1$ to $T_2$ when the traction control system is attempting to maintain the target value of wheel spin.

Figure 4 illustrates operation of the system illustrated in Figures 1 and 2. The conditions and the time axis of Figure 4 corresponds to those of Figure 3, so that excessive wheel spin is detected at time $T_0$ and the vehicle drives onto a higher friction surface at $T_2$.

Between times $T_0$ and $T_1$, operation of the present system is the same as with known systems. During the time interval $T_1$ to $T_2$, the present system operates with a torque reapplication rate which is less than that of the known system. Thus, the system attempts to maintain wheel spin at the target value but, because the rate of reapplication of torque is less than with the known system, the amplitude of oscillations of engine torque are smaller in Figure 4 than in Figure 3 for the known system.

After the time $T_2$ when the driven wheels recover from wheel spin, the present system reapplies torque as illustrated by the continuous line with the broken line indicating the reapplication illustrated in Figure 3 for comparison. The initial rate of increase of torque in Figure 4 is less than that of the known system but increases after equal time intervals so as to follow a substantially exponential increase. Thus, at time $T_4$, engine torque has been restored to the driver-demanded value P and the traction control system is disengaged until the next detection of excessive wheel spin.

As is apparent from Figures 3 and 4, the torque reapplication phase of the present traction control system is substantially shorter than that of the known type of system. Thus, the acceleration performance of the vehicle equipped with the present system is substantially improved compared with vehicles equipped with known types of traction control systems.

It is thus possible to provide a traction control system which can operate with a greater degree of stability in controlling wheel spin to the target value ie variations in engine torque are reduced compared with known systems which adopt a single rate of reapplication of torque. Further, the reapplication phase to the driver-demanded engine torque is, in many circumstances, substantially reduced compared with known systems. It is thus unnecessary to choose the rate of torque recovery as a compromise between conflicting requirements of stability and recovery time so that the performance of the traction control system is substantially improved.

Various modifications may be made within the scope of the invention. For instance, in some circumstances such as when only a relatively small amount of excessive wheel spin occurs, the embodiment described hereinbefore may take longer to eliminate wheel spin than the known arrangement. In order to avoid this, the traction control system may be arranged to reapply torque at time $T_1$ at a higher rate, for instance at the rate illustrated in Figure 3. If recovery from wheel spin occurs rapidly i.e. the time period from $T_1$ to $T_2$ is small, it may then not be necessary to use the lower rate of torque reapplication shown at $T_2$ in Figure 4. However, if recovery from wheel spin does not occur sufficiently rapidly i.e. the period $T_1$ to $T_2$ is prolonged, then the system adopts the slower initial rate of reapplication during the time period from $T_1$ to $T_2$ and initially after $T_2$ as described hereinbefore. The transition to this mode may, for instance, be made by comparing the time after $T_1$ and before $T_2$ with a predetermined threshold time period, or by changing to this mode if, after the time $T_1$, the target spin value is exceeded more than a predetermined number of times.

## Claims

1. A traction control system for a vehicle, comprising means for reducing vehicle drive when wheel spin exceeds a first threshold, characterised by means (7) for increasing vehicle drive initially at a first rate and subsequently at a second rate greater than the first rate.

2. A traction control system as claimed in Claim 1, characterised in that the increasing means (7) is arranged to be actuated to increase vehicle drive each time wheel spin falls to less than a second threshold.

3. A traction control system as claimed in Claim 2, characterised in that the second threshold is less than the first threshold.

4. A traction control system as claimed in Claim 2 or 3, characterised in that the reducing means is arranged to reduce drive each time the wheel spin exceeds the second threshold.

5. A traction control system as claimed in any one of Claims 2 to 4, characterised in that the increasing means (7) is arranged to increase vehicle drive at the first rate for a predetermined time provided that wheel spin remains below the second threshold.

6. A traction control system as claimed in any one of the preceding claims, characterised in that the increasing means (7) is arranged to increase vehicle drive at a plurality of rates of increasing size.

7. A traction control system as claimed in Claim 6, characterised in that the plurality of rates of increasing size are of linearly increasing size.

8. A traction control system as claimed in Claim 6 or 7, characterised in that the rate of increase increases continuously with time.

9. A traction control system as claimed in Claim 6 or 7, characterised in that the rate of increase comprises a plurality of discrete rates increasing with time.

10. A traction control system as claimed in Claim 8, characterised in that the rate of increase is exponential.

11. A traction control system as claimed in Claim 9, characterised in that the rate of increase is a line segment approximation to an exponential function.

12. A traction control system as claimed in any one of the preceding claims, characterised by means for disabling traction control when the vehicle drive is restored to a driver demanded value.

13. A method of controlling traction of a vehicle, comprising reducing vehicle drive when wheel spin exceeds a first threshold and increasing vehicle drive initially at a first rate and subsequently at a second rate greater than the first rate.

14. A method as claimed in Claim 13, characterised in that the vehicle drive is increased each time wheel spin falls to less than a second threshold.

15. A method as claimed in Claim 14, characterised in that the second threshold is less than the first threshold.

16. A method as claimed in Claim 14 or 15, characterised in that drive is reduced each time the wheel spin exceeds the second threshold.

17. A method as claimed in any one of Claims 14 to 16, characterised in that the vehicle drive is increased at a first rate for a predetermined time provided that wheel spin remains below the second threshold.

18. A method as claimed in any one of Claims 13 to 17, characterised in that the vehicle drive is increased at a plurality of rates of increasing size.

19. A method as claimed in Claim 18, characterised in that the plurality of rates of increasing size are of linearly increasing size.

20. A method as claimed in Claim 18 or 19, characterised in that the rate of increase increases continuously with time.

21. A method as claimed in Claim 18 or 19, characterised in that the rate of increase comprises a plurality of discrete rates increasing with time.

22. A method as claimed in Claim 20, characterised in that the rate of increase is exponential.

23. A method as claimed in Claim 21, characterised in that the rate of increase is a line segment approximation to an exponential function.

24. A method as claimed in any one of Claims 13 to 23, characterised in that traction control is disabled when the vehicle drive is restored to a driver demanded value.

FIG.1.

```
                              ┌─────────────┐
                         ╱────┤ Is          ├────╲  ──20
                    N  ╱      │ wheelspin   │      ╲
              ◄──────┤        │     >       │       │
                       ╲      │ detection   │      ╱
                         ╲────┤ threshold   ├────╱
                              │     ?       │
                              └──────┬──────┘
                                     │ Y
```

Is wheelspin > detection threshold ? — 20

Is wheelspin > than target ? — 21

Torque reapply = a
Unramp = 0 — 23

Engine torque demand = Engine torque demand − P.D control value — 22

Is unramp > X ? — 24

Torque reapply = Torque reapply + Z — 26

Unramp = Unramp + 1 — 25

Unramp = 0 — 27

Engine torque demand = Engine torque demand + Torque reapply — 28

Demand = driver demand — 29

Is engine torque demand ≥ demand ? — 30

Engine torque demand = demand — 31

FIG.2.

FIG.3.

FIG.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | WO-A-9 208 625 (ROBERT BOSCH GMBH)<br><br>* page 1, line 6 - page 3, line 24; claim 1; figures 1A-5 * | 1-8, 12-20,24 | B60K28/16 |
| A | WO-A-8 905 743 (ROBERT BOSCH GMBH)<br>* page 1, line 13 - page 2, line 24; claims 1-2,7; figures 1-2 * | 1,13 | |
| A | DE-A-3 844 121 (ISUZU MOTORS LTD.)<br><br>* column 3, line 56 - column 5, line 30; claim 1; figures 1-4 * | 1-6, 13-18 | |
| A | DE-C-3 728 574 (DAIMLER-BENZ AG)<br><br>* column 2, line 51 - column 3, line 10 *<br>* column 3, line 58 - column 4, line 31; claim 1; figure * | 1-6, 13-18 | |

TECHNICAL FIELDS SEARCHED (Int. Cl.5)

B60K
B60T

The present search report has been drawn up for all claims

| Place of search | Date of completion of the search | Examiner |
|---|---|---|
| THE HAGUE | 16 JULY 1992 | RIVERO C.G. |